# EUROPÄISCHE PATENTSCHRIFT

(11) **EP 2 718 172 B1**
(45) Veröffentlichungstag und Bekanntmachung des Hinweises auf die Patenterteilung: **13.07.2016**
(21) Anmeldenummer: 12726597.3
(22) Anmeldetag: 14.05.2012
(51) Int. Cl.: B62D 15/02, G08G 1/16, B60Q 9/00

(54) **VERFAHREN ZUR PASSIVEN FAHRERASSISTENZ IN EINEM FAHRERASSISTENZSYSTEM**
METHOD FOR PASSIVE DRIVER ASSISTANCE IN A DRIVER ASSISTANCE SYSTEM
PROCÉDÉ D'ASSISTANCE PASSIVE AU CONDUCTEUR DANS UN SYSTÈME D'ASSISTANCE AU CONDUCTEUR

(30) Priorität: 10.06.2011 DE 102011077388
(43) Veröffentlichungstag der Anmeldung: 16.04.2014
(73) Patentinhaber: Robert Bosch GmbH, 70442 Stuttgart (DE)
(72) Erfinder: SCHNEIDER, Marcus, 71642 Ludwigsburg (DE); NIEMZ, Volker, 71277 Rutesheim (DE)
(86) Internationale Anmeldenummer: PCT/EP2012/058913
(87) Internationale Veröffentlichungsnummer: WO 2012/168037

(56) Entgegenhaltungen:
- EP-A1- 1 262 739
- EP-A1- 1 646 548
- EP-A2- 1 862 376
- EP-A2- 2 081 167
- DE-A1-102008 036 009
- DE-A1-102009 024 062
- JP-A- 2009 265 803

## Beschreibung

### Stand der Technik

Die Erfindung betrifft ein Verfahren zur Verfahren zur passiven Fahrerassistenz in einem Fahrerassistenzsystem, sowie ein derartiges Fahrerassistenzsystem.

Ein Fahrerassistenzsystem stellt eine oder mehrere Zusatzeinrichtungen in einem Fahrzeug zur Unterstützung des Fahrers in bestimmten Fahrsituationen bereit. Solche Zusatzeinrichtungen bzw. Subsysteme sind beispielsweise ABS (Antiblockiersystem), ESP (Elektronisches Stabilitätsprogramm), ein Abstandsregeltempomat ("Adaptive Cruise Control", ACC) oder ein Parkassistenzsystem ("Park Distance Control", PDC). Besonders in engen Rangiersituationen wie Einparkmanövern oder in Situationen, bei denen der Fahrer nur eingeschränkte Rangiermöglichkeiten hat, können Fahrerassistenzsysteme den Fahrer unterstützen.

Systeme zur passiven Fahrerassistenz verfügen im Allgemeinen über eine Umfeldsensorik zur Erfassung eines Fahrzeugumfelds sowie über Ausgabekomponenten, um dem Fahrer Informationen über das Fahrzeugumfeld zur Verfügung zu stellen. Als Sensorik kommen in Parkassistenzsystemen z.B. videobasierte und/oder ultraschallbasierte Sensorsysteme zum Einsatz. Bei bekannten, kombinierten Systemen werden bspw. Abstandsinformationen zu Objekten bzw. potentiellen Hindernissen im Umfeld in ein Videobild eingeblendet, oder es werden Zielparkpositionen und/oder eine (Einpark-)Trajektorie im Videobild angezeigt. Üblicherweise wird entweder ein Ist-Zustand dargestellt, welcher durch die momentane Fahrtrajektorie (berechnet ausgehend vom momentanen Lenkwinkel) und optional dem aktuellen Abstand zu Hindernissen charakterisiert ist. Alternativ wird ein Soll-Zustand dargestellt, der auf einem bestimmten einzuschlagenden Lenkradwinkel oder einer einzuhaltenden Solltrajektorie basiert.

Die DE 10 2005 034 700 A1 beschreibt eine Einparkvorrichtung für ein Fahrzeug, die eine Messeinrichtung zur Vermessung einer Parklücke, eine Recheneinheit zur Berechnung einer Einparktrajektorie in die Parklücke, eine Kamera zur Erfassung eines Fahrraums des Fahrzeugs und eine Anzeige zur Darstellung des Kamerabildes umfasst. Diese Einparkvorrichtung blendet neben der Einparktrajektorie auch einen auf der Einparktrajektorie liegenden Umlenkpunkt in das Kamerabild ein.

Aus der DE 19 925 584 A1 ist ein Verfahren bekannt, das einem Fahrer einen Fahrweg angezeigt. Dazu wird ein Bild vom rückwärtigen Fahrraum des Fahrzeugs erfasst und in einer Anzeige zusammen mit dem Fahrweg dargestellt, den das Fahrzeug bei einem unveränderten Lenkwinkel nehmen würde. Zusätzlich wird auf Basis des maximalen Lenkradeinschlages der Bereich angezeigt, in dem mögliche Fahrwege liegen können. Solche videobasierten Systeme sollen es dem Fahrer nach einer gewissen Einiernzeit ermöglichen, Hindernisse zu umfahren.

Die DE 10 2008 036 009 A1 beschreibt ein Verfahren zum Kollisionsschutz in einem Parkassistenten eines Fahrzeuges bei dem Umfeldinformationen mit einer Umfeldsensorik, insbesondere Ultraschallsensoren, erfasst werden. In Kombination mit der Fahrzeugeigenbewegung wird eine Kollisionswahrscheinlichkeit und ein entsprechender Kollisionsbereich bestimmt. Der Kollisionsbereich wird als hervorgehobener Hinweisbereich oder als hinweisendes Hinweiselement am Fahrzeug optisch visualisiert. Zusätzlich zeigt eine Multifunktionsanzeige weitere Informationen, wie Fahrtrichtung und Fahrzeuggeschwindigkeit, eine Umfeldkarte mit Warnungen vor einer möglichen Kollision, Eigengeschwindigkeit, Lenkwinkel, Fahrzeugabmessungen und prädiziertem Fahrschlauch. Dabei wird der prädizierte Fahrschlauch aus der Fahrzeugeigenbewegung bestimmt, wobei die Trajektorie aus der Eigengeschwindigkeit des Fahrzeuges und dem Lenkwinkel abgeleitet wird.

Die EP 1 862 376 A2 beschreibt ein Verfahren zur Steuerung eines Einparkvorgangs. Dabei ist vorgesehen, auf einer Anzeigeeinheit im inneren des Kraftfahrzeugs ein Bild der Umgebung des Kraftfahrzeugs darzustellen. Das Bild der Umgebung kann beispielsweise ein Kamerabild oder ein simulierter Blick aus der Vogelperspektive sein. In dem Umgebungsbild wird ferner ein Zielobjekt dargestellt, weiches einer Zielposition für das Kraftfahrzeug nach dem Einparken entspricht. Diese Zielposition kann dabei durch den Fahrer verändert werden. Zudem ist vorgesehen, in dem Umgebungsbild eine oder mehrere Trajektorien darzustellen. Der Bediener kann anschließend aus den mehreren möglichen Trajektorien die von ihm bevorzugte Trajektorie auswählen. Der für die Durchführung eines Rangiermanövers entlang der ausgewählten Trajektorie erforderliche Rangierraum kann dabei graphisch hervorgehoben werden. Dabei kann der Fahrer leicht in der Darstellung erkennen, ob eine automatische Interpretation der Umgebungsdaten zu einem korrekten Ergebnis geführt hat oder ob die zur Auswahl angebotene Trajektorie zu einer Kollision führen würde. Im Fall einer möglichen Kollision kann der Fahrer eine andere Trajektorie auswählen, um einen teilautomatischen oder einen vollautomatischen Einparkvorgang durchführen zu lassen.

Der nächstliegende Stand der Technik ist in der DE 10 2008 036 009 A1 zu sehen.

### Offenbarung der Erfindung

Erfindungsgemäß wird ein Verfahren in einem Fahrerassistenzsystem eines Fahrzeuges vorgeschlagen, das folgende Schritte umfasst: Erfassen von Umfelddaten, die ein Umfeld des Fahrzeugs repräsentieren, durch eine Umfeldsensorik; Berechnen, basierend auf den Umfelddaten, eines kollisionsfrei fahrbaren Fahrbereiches; und Bereitstellen eines Ausgabesignals zur Ausgabe des berechneten Fahrbereichs auf eine Mensch-Maschine-Schnittstelle des Fahrzeugs.

Im Rahmen der vorliegenden Erfindung umfasst Umfeldsensorik Komponenten, die insbesondere das Erfassen von Objekten im Fahrzeugumfeld ermöglichen. Typischerweise sind solche Komponenten einem oder mehreren Subsystem(en) des Fahrerassistenzsystems zugeordnet. Zum Beispiel können Sensoren, die auf Ultraschall, Radar, Laser oder Kombinationen hieraus basieren, in einem ACC-System, einem PDC-System, einem Notbremssystem oder dergleichen zum Einsatz kommen. Mithilfe der Umfeldsensorik des Fahrerassistenzsystems können Objekte im Fahrzeugumfeld erfasst werden und beispielsweise deren Position, Größe und Distanz zum Fahrzeug bestimmt werden. Sensordaten und gegebenenfalls daraus abgeleitete Größen können als Umfelddaten zusammengefasst werden, die die Umfeldsituation des Fahrzeugs repräsentieren. In einer Implementierung des erfindungsgemäßen Verfahrens umfassen die Umfelddaten Distanzwerte zu Hindernissen im Umfeld des Fahrzeugs.

Weiterhin bezeichnet der kollisionsfrei fahrbare Fahrbereich einen Bereich im Fahrzeugumfeld, der von der Reichweite der Umfeldsensorik abhängt und von dem Fahrzeugumfeldbereiche ausgenommen sind, in denen die Umfeldsensorik Objekte detektiert, die ein Hindernis darstellen. Zusätzlich oder alternativ können die Abmessungen dieses Bereiches fahrzustandsabhängig sein und beispielsweise an die momentane Geschwindigkeit oder abhängig davon, ob das Fahrzeug sich auf einer Landstraße in einer ländlichen Gegend, einer Autobahn oder im Stadtverkehr befindet, angepasst sein. Der kollisionsfrei fahrbare Fahrbereich kann auch einen Sicherheitsabstand um Hindernisse vorsehen, der ebenfalls fahrzustandsabhängig variiert werden kann und der zusätzlich zu den Hindernissen vom Fahrzeugumfeldbereich ausgenommen ist. Auf diese Weise kann der kollisionsfrei fahrbare Fahrbereich einen Sicherheitsbereich um ein Hindernis umfassen.

Gemäß dem erfindungsgemäßen Verfahren wird die Berechnung eines kollisionsfrei fahrbaren Fahrbereiches basierend auf einer momentanen Umfeldsituation sowie mindestens einer früheren Umfeldsituation durchgeführt. In einer weiteren Realisierung des erfindungsgemäßen Verfahrens wird eine Fahrzeugtrajektorie basierend auf einem momentanen Lenkradwinkel berechnet und ausgegeben. Der Fahrbereich umfasst erfindungsgemäß Bereiche kollisionsfrei fahrbarer Fahrzeugtrajektorien ausgehend von der momentanen Fahrzeugposition. Kollisionsfrei fahrbare Fahrzeugtrajektorien können dabei Fahrzeugtrajektorien umfassen, auf denen das Fahrzeug nicht mit einem Hindernis kollidiert, die also kollisionsfrei fahrbar sind. Zusätzlich oder alternative können kollisionsfrei fahrbare Fahrzeugtrajektorien Fahrzeugtrajektorien umfassen, auf denen das Fahrzeug nicht in den durch den Sicherheitsabstand um ein Hindernis bestimmten Bereich eindringt.

In einer Implementierung des erfindungsgemäßen Verfahrens umfasst der Fahrbereich genau einen flächenhaften zusammenhängenden Bereich vor und/oder hinter dem Fahrzeug. Der flächenhaft zusammenhängende Bereich kann ausgegeben werden. In einer weiteren Implementierung des Verfahrens wird basierend auf einem momentanen Lenkungszustand des Fahrzeugs eine resultierende Fahrzeugtrajektorie berechnet und ausgegeben.

Die Ausgabe kann eine optische, akustische und/oder haptische Ausgabe umfassen. Eine optische Ausgabe kann beispielsweise die Ausgabe auf einem Display an den Fahrer erfolgen, wobei der berechnete, kollisionsfrei fahrbare Bereich auf dem Display dargestellt wird, das beispielsweise Teil eines HMI (Human Machine Interface, Mensch-Maschine Schnittstelle) sein kann. Bei einer akustischen Ausgabe kann der Fahrer beispielsweise durch über einen Lautsprecher ausgesendete akustische Signale vor dem Eindringen in den Sicherheitsabstand um ein Hindernis gewarnt werden. Haptische Ausgaben können über ein Ruckeln am Lenkrad realisiert werden, um den Fahrer beispielsweise vor einem bevorstehenden Eindringen in einen Sicherheitsbereich um ein Hindernisse zu warnen.

Weiterhin kann im Rahmen des erfindungsgemäßen Verfahrens ein Lenkradwinkel für eine nach vorgegebenen Kriterien optimale Fahrzeugtrajektorie ermittelt werden und die resultierende Fahrzeugtrajektorie ausgegeben werden. Solche Kriterien könnten z.B. ein optimaler (etwa maximaler) Abstand zu allen detektieren Hindernissen entlang der Trajektorie betreffen.

Vorzugsweise erfolgt die Ausgabe berechneter Fahrzeugtrajektorien optisch auf einem Display, das beispielsweise Teil eines HMI ("Human Machine Interface", Mensch-Maschine Schnittstelle) sein kann. Die momentane und optimale Fahrzeugtrajektorie können bei der Ausgabe unterschiedlich dargestellt werden. Beispielsweise können die Trajektorien farblich unterschiedlich gekennzeichnet werden oder die Konturen von Linien können unterschiedlich als gestrichelte oder gepunktete Linie, unterschiedlich dick, etc. dargestellt werden.

In einer bevorzugten Ausführungsform erfolgt die optische Ausgabe des kollisionsfrei fahrbaren Fahrbereiches in einem Videobild, das die Fahrzeugumgebung darstellt. Das Videobild kann die Fahrzeugumgebung perspektivisch in ein oder mehreren Ansichten darstellen. Vorzugsweise erfolgt die Darstellung in einer Draufsicht oder aus der Vogelperspektive.

Erfindungsgemäß wird weiterhin ein Computerprogramm vorgeschlagen, gemäß dem eines der hierin beschriebenen Verfahren durchgeführt wird, wenn das Computerprogramm auf einer programmierbaren Computereinrichtung ausgeführt wird. Bei der Computereinrichtung kann es sich beispielsweise um ein Modul zur Implementierung eines Fahrerassistenzsystems, oder eines Subsystems hiervon, in einem Fahrzeug handeln. Das Computerprogramm kann auf einem maschinenlesbaren Speichermedium gespeichert werden, etwa auf einem permanenten oder wiederbeschreibbaren Speichermedium oder in Zuordnung zu einer Computereinrichtung oder auf einer entfernbaren CD-ROM, DVD oder einem USB-Stick. Zusätzlich oder alternativ kann das Computerprogramm auf einer Computereinrichtung wie etwa einem Server zum Herunterladen bereitgestellt werden, z.B. über ein Datennetzwerk wie etwa das Internet oder eine Kommunikationsverbindung wie etwa eine Telefonleitung oder eine drahtlose Verbindung.

Erfindungsgemäß wird weiterhin ein Fahrerassistenzsystem vorgeschlagen, das folgende Komponenten umfasst: Umfeldsensorik zum Erfassen von Umfelddaten, die ein Umfeld des Fahrzeugs repräsentieren, mindestens eine Komponente zum Berechnen eines kollisionsfrei fahrbaren Fahrbereiches basierend auf den Umfelddaten und mindestens eine Komponente zum Bereitstellen eines Ausgabesignals zur Ausgabe des berechneten Fahrbereichs auf eine Mensch-Maschine-Schnittstelle des Fahrzeugs. Das erfindungsgemäße Fahrerassistenzsystem ist vorzugsweise zur Durchführung des vorstehend beschrieben Verfahrens ausgebildet.

Die Umfeldsensorik kann bspw. eine oder mehrere Kameras umfassen, zusätzlich oder alternativ einen oder mehrere Ultraschallsensoren. Bei einer Realisierung umfasst die Umfeldsensorik des erfindungsgemäßen Fahrerassistenzsystems distanzmessende Umfeldsensorik. In einer weiteren Realisierung umfasst das erfindungsgemäße Fahrerassistenzsystem Mittel zum Bestimmen eines Lenkradwinkels und/oder mindestens eine Ausgabeeinheit zur optischen, akustischen und/oder haptischen Ausgabe.

### Vorteile der Erfindung

Basierend auf der Erfindung kann dem Fahrer eine Manövrierhilfe angeboten werden, die intuitiv besser erfassbar ist als bei bekannten Systemen, wobei die zugrundeliegende Technik kostengünstig implementierbar ist. Die Erfindung ermöglicht insbesondere eine den bekannten Assistenten überlegene Fahrwegvisualisierung, d.h. Visualisierung einer Palette möglicher Fahrwege. Auf diese Weise kann der Fahrer in Rangiersituationen, insbesondere bei schwierigen Rangiermanövern, besser unterstützt werden. Dem Fahrer wird ein kollisionsfrei fahrbarer Bereich möglicher Trajektorien angezeigt. Der Fahrer kann seine subjektive Einschätzung der Fahrsituation in sein resultierendes Fahrverhalten einfließen lassen. Mit anderen Worten wird dem Fahrer ein Rahmen (der "Fahrbereich") zur Verfügung gestellt, der eine Mehrzahl möglicher Trajektorien umfasst, und basierend auf dem der Fahrer eine konkrete Manöverstrategie auswählen kann.

Der Fahrer kann intuitiv einleuchtend unmittelbar erkennen, ob und wenn ja in welche Richtung und um wieviel der momentane Lenkwinkel zur Umfahrung eines Hindernisses korrigiert werden sollte bzw. ob eine von ihm durchgeführte Korrektur ausreichend ist, ein Hindernis oder mehrere Hindernisse kollisionsfrei zu vermeiden, was beim Manövrieren in beengten Situationen besonders hilfreich ist.

Ein erfindungsgemäß ausgerüstetes System wird auf entsprechend erhöhte Akzeptanz treffen. Der wesentlich verbesserte Nutzwert erfordert dabei keinen zusätzlichen Montageaufwand, da in der Regel keine zusätzlichen, bspw. sensorischen Komponenten erforderlich sind: Viele Fahrzeuge verfügen ohnehin bereits über eine umfängliche Sensorik. Somit beschränkt sich die Implementierung der Erfindung in der Regel auf ein Software-Update etwa einer ECU ("Electronic Control Unit"). Das erfindungsgemäße Verfahren kann somit auch einfach nachgerüstet werden.

### Kurze Beschreibung der Zeichnungen

Weitere Aspekte und Vorteile der Erfindung werden nunmehr anhand der beigefügten Figuren eingehender beschrieben.

Hierbei zeigt:
- Figur 1: eine schematische Darstellung eines Fahrzeugs in Verbindung mit einer Ist- und einer Soll-Trajektorie,
- Figur 2: ein mit erfindungsgemäßem Fahrerassistenzsystem ausgerüstetes Fahrzeug in einer einem beispielhaften Fahrzeugumfeld,
- Figur 3: ein mit erfindungsgemäßem Fahrerassistenzsystem ausgerüstetes Fahrzeug und einem kollisionsfrei fahrbaren Fahrbereich in schematischer Darstellung, und
- Figur 4: in Form eines Flussdiagramms eine Arbeitsweise des erfindungsgemäßen Fahrerassistenzsystems aus Figuren 2, 3,

### Ausführungsformen der Erfindung

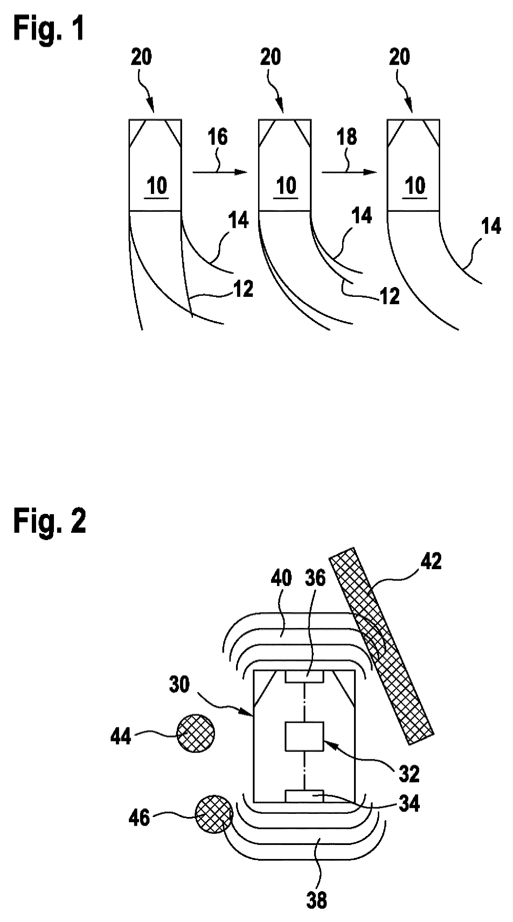

In Figur 1 ist beispielhaft eine Anzeige 20 dargestellt, die ein Fahrassistenzsystem 32 auf einem Display im Fahrzeug bereitstellen kann, um den Fahrer in eine bestimmte Position 10 zu führen. Dabei wird dem Fahrer die momentane Trajektorie 12 und gegebenenfalls der momentane Abstand zu Hindernissen (nicht gezeigt) und/oder die Soll-Trajektorie 14 angezeigt, auf der sich das Fahrzeug 10 idealerweise bewegen sollte. Im Laufe des Rangierens adaptiert der Fahrer den Lenkradwinkel und die Anzeige 20 aktualisiert 16 die Lage der momentanen Trajektorie 12 gegenüber der Soll-Trajektorie 14. Ziel des Fahrers ist es, durch Adaption des Lenkradwinkels zu erreichen, dass die momentane Trajektorie 12 mit der Soll-Trajektorie 14 übereinstimmt 18. Auf diese Weise kann der Fahrer in Manöversituationen unterstützt werden.

Figur 2 zeigt ein Fahrzeug 30, das mit erfindungsgemäßem Fahrerassistenzsystem 32 ausgerüstet ist, wobei sich das Fahrzeug 30 in einem Umfeld mit Hindernissen 42, 44, 46 befindet. Das Fahrerassistenzsystem 32 umfasst distanzmessende Umfeldsensorik 34, 36 im vorderen und im hinteren Bereich des Fahrzeuges 30. Bei der Umfeldsensorik handelt es sich um mehrere Ultraschallsensoren 34, 36, die in der Stoßstange des Fahrzeuges 30 verbaut sind. Die Ultraschallsensoren 34 im hinteren Bereich des Fahrzeuges 30 weisen einen Erfassungsbereich 38 auf, der das hintere und teilweise seitlich gelegene Umfeld des Fahrzeuges 30 abdeckt. Die Ultraschallsensoren 36 im vorderen Bereich des Fahrzeuges 30 weisen einen Erfassungsbereich 40 auf, der das vordere und teilweise seitlich gelegene Umfeld des Fahrzeuges 30 abdeckt.

Im vorderen Umfeldbereich des Fahrzeuges 30 befindet sich eine Wand 42, die ein massives Hindernis im Fahrzeugumfeld des Fahrzeuges 30 darstellt. Die Ultraschallsensoren 36 an der Front des Fahrzeuges 30 weisen einen Erfassungsbereich 40 auf, der es in der gezeigten momentanen Fahrzeugposition erlaubt, die Mauer 42 zu erfassen. Aus den Daten der Ultraschallsensoren 36 wird die Distanz der Mauer 42 zu dem Fahrzeug 30 berechnet.

Im hinteren und seitlichen Umfeldbereich des Fahrzeuges 32 befinden sich weitere Hindernisse 44 und 46. Die Ultraschallsensoren 34 am Heck des Fahrzeuges 30 weisen einen Erfassungsbereich 38 auf, der es in der gezeigten momentanen Fahrzeugposition erlaubt, das Hindernis 46 zu erfassen. Auch aus den Daten der Ultraschallsensoren 34 wird die Distanz des Hindernisses 46 zu dem Fahrzeug 30 berechnet.

In anderen Ausführungsbeispielen von erfindungsgemäßem Fahrerassistenzsystem 32 können als distanzmessende Umfeldsensorik auch auf Laser, Video und/oder Radar basierte Sensoren eingesetzt werden. Die Sensoren können weiterhin in unterschiedlichen Bereichen des Fahrzeuges 30 angebracht sein, um Hindernis 42, 44, 46 im Fahrzeugumfeld zu erfassen.

Die Daten der Ultrasschallsensoren 34, 36 werden als Umgebungsdaten zusammengefasst und der Berechnung eines kollisionsfrei fahrbaren Fahrbereiches 48 zu Grunde gelegt. Bei der Berechnung werden basierend auf einem momentanen Lenkungszustand des Fahrzeugs 32 resultierende Fahrzeugtrajektorien berechnet und daraus der kollisionsfrei fahrbare Fahrbereich 48 bestimmt. Das Hindernis 44 wird in der in Figur 2 dargestellten momentanen Fahrzeugposition von keinem der Ultraschallsensoren erfasst und ist somit nicht in den momentanen Umfelddaten enthalten. Das Hindernis 44 kann aber auf der Basis von früheren in einem Speicher abgelegten Umfelddaten, in die Berechnung eingehen.

Der kollisionsfrei fahrbare Fahrbereich 48 kennzeichnet den Bereich vor und hinter dem Fahrzeug 30, der ohne Kollisionsgefahr von dem Fahrer befahren werden kann. Der berechnete kollisionsfrei fahrbare Fahrbereich 48 wird auf einem Display einer Mensch-Maschine-Schnittstelle des Fahrassistenzsystems 32 als flächenhaft zusammenhängender Bereich vor und hinter dem Fahrzeug optisch dargestellt.

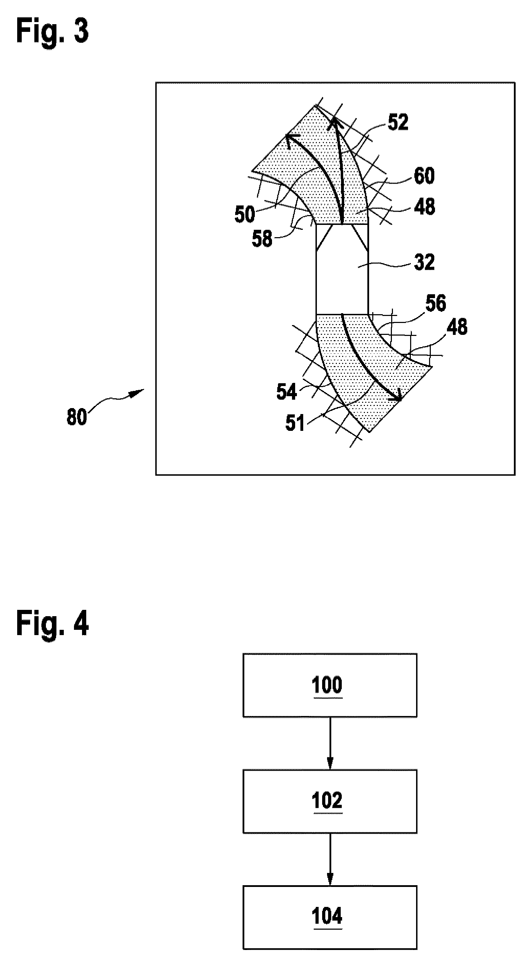

Figur 3 zeigt ein Beispiel für eine Anzeige zur Darstellung für den Fahrer auf dem Display der Mensch-Maschine-Schnittstelle von erfindungsgemäßem Fahrerassistenzsystem 32. Die Anzeige umfasst eine Darstellung des Fahrzeugs 30, in dessen Umfeld sich die Hindernisse 42, 44, und 46 gemäß Figur 2 befinden. Der kollisionsfrei fahrbare Fahrbereich 48 ist durch einen flächenhaft zusammenhängenden Bereich dargestellt, der von den Trajektorien 54, 56 hinter dem Fahrzeug und den Trajektorien 58, 60 vor dem Fahrzeug 30 begrenzt wird. Die begrenzenden Trajektorien 54, 56, 58 und 60 entsprechen dabei den Trajektorien, die einem maximal möglichen Lenkradwinkel entsprechen, ohne mit einem der Hindernisse 42, 44, 46 zu kollidieren oder in den vorbestimmten Sicherheitsbereich um eines der Hindernisse 42, 44, 46 einzudringen.

Neben dem kollisionsfrei fahrbaren Fahrbereich 48 sind drei weitere beispielhafte Trajektorien 50, 51 und 52 in Figur 3 dargestellt. Die Trajektorien 50 und 51 entsprechen den aus dem momentanen Lenkradwinkel berechneten Trajektorien im Bereich vor und hinter dem Fahrzeug. Diese Trajektorien 50, 51 können je nach Fahrtrichtung auch einzeln angezeigt werden. Fallen die Trajektorien 50, 51 wie in Figur 3 angedeutet in den berechneten, kollisionsfrei fahrbaren Fahrbereich 48, werden diese in grün dargestellt, um dem Fahrer zu signalisieren, dass der momentane Lenkwinkel einer möglichen kollisionsfrei fahrbaren Trajektorie entspricht. Die in Figur 3 dargestellte Trajektorie 52 zeigt eine weitere Beispieltrajektorie, die auf Basis des momentanen Lenkradwinkels berechnet wurde. Diese Trajektorie 52 führt allerdings aus dem berechneten, kollisionsfrei fahrbaren Fahrbereich 48 heraus und wird daher in rot dargestellt, um dem Fahrer zu signalisieren, dass Kollisionsgefahr besteht. Auf diese Weise stellt das Fahrerassistenzsystem 32 eine Manöverhilfe dar, die die intuitiv besser erfassbar ist als bei den aus dem Stand der Technik bekannten Systemen.

Eine Funktionsweise und ein Zusammenwirken der in Figuren 2 und 3 gezeigten Komponenten werden nachfolgend mit Bezug auf das Flussdiagramm der Figur 4 beschrieben. Allgemein ist der Fahrerassistent 32 ausgebildet, um dem Fahrer insbesondere in schwierigen Manöversituationen eine intuitive Manöverhilfe zu bieten.

In einem ersten Schritt 100 des Verfahrens zur Fahrwegvisualisierung werden Umfelddaten, die das Umfeld des Fahrzeugs 30 repräsentieren, durch Ultraschallabstandssensoren 34, 36 erfasst. Die Umfelddaten umfassen dabei insbesondere Daten, aus denen die Distanz von Hindernissen 42, 44, und 46 zu dem Fahrzeug 32.

Aus den Umfelddaten wird in Schritt 102 ein kollisionsfrei fahrbarer Fahrbereich bestimmt, wobei ausgehend von der momentanen Fahrzeugposition kollisionsfrei fahrbare Fahrzeugtrajektorien auf Basis des Lenkwinkels berechnet werden. Daraufhin wird in Schritt 104 ein Ausgabesignal bereitgestellt, das den berechneten Fahrbereich auf einem Display einer Mensch-Maschine-Schnittstelle des Fahrzeugs 30 ausgibt.

Die Erfindung ist nicht auf die hier beschriebenen Ausführungsbeispiele und die darin hervorgehobenen Aspekte beschränkt, vielmehr sind innerhalb des durch die anhängenden Ansprüche angegebenen Bereichs eine Vielzahl von Abwandlungen möglich, die im Rahmen fachmännischen Handels liegen.

## Patentansprüche

1. Verfahren in einem Fahrerassistenzsystem (32) eines Fahrzeugs (30), mit den folgenden Schritten:
- Erfassen von Umfelddaten (100), die ein Umfeld des Fahrzeugs (30) repräsentieren, durch eine Umfeldsensorik (34, 36); Berechnen (102), basierend auf den Umfelddaten, eines kollisionsfrei fahrbaren Fahrbereiches (48), der Bereiche kollisionsfrei fahrbarer Fahrzeugtrajektorien ausgehend von einer momentanen Fahrzeugposition umfasst;
- Bereitstellen eines Ausgabesignals (104) zur Ausgabe des berechneten Fahrbereichs (48) auf eine Mensch-Maschine-Schnittstelle des Fahrzeugs (30) und
- Ausgabe auf einem Display einer Mensch-Maschine-Schnittstelle des Fahrzeugs (30),
- wobei die Berechnung basierend auf einer momentanen Umfeldsituation sowie mindestens einer früheren Umfeldsituation durchgeführt wird.

2. Verfahren nach Anspruch 1, wobei der kollisionsfreie Fahrbereich mindestens einen Bereich vor und/oder hinter dem Fahrzeug umfasst.

3. Verfahren nach einem der vorhergehenden Ansprüche, wobei der Fahrbereich genau einen flächenhaften zusammenhängenden Bereich vor und/oder hinter dem Fahrzeug umfasst.

4. Verfahren nach einem der vorhergehenden Ansprüche, wobei basierend auf einem momentanen Lenkungszustand des Fahrzeugs (30) eine resultierende Fahrzeugtrajektorie (50, 51, 52) berechnet und ausgegeben wird.

5. Verfahren nach einem der vorhergehenden Ansprüche, wobei der Lenkradwinkel für eine nach vorgegebenen Kriterien optimale Fahrzeugtrajektorie ermittelt wird und die resultierende Fahrzeugtrajektorie ausgegeben wird.

6. Verfahren nach einem der vorhergehenden Ansprüche, wobei der kollisionsfreie Fahrbereich überlagert auf einer Darstellung der Fahrzeugumgebung angezeigt wird.

7. Computerprogramm zur Durchführung des Verfahrens nach einem der vorhergehenden Ansprüche, wenn das Computerprogramm auf einer programmierbaren Computereinrichtung ausgeführt wird.

8. Fahrerassistenzsystem (32), mit den folgenden Komponenten:
- Umfeldsensorik (34, 36) zum Erfassen von Umfelddaten, die ein Umfeld des Fahrzeugs (30) repräsentieren,
- eine Komponente zum Berechnen eines kollisionsfrei fahrbaren Fahrbereiches (48) basierend auf den Umfelddaten, wobei der Fahrbereich (48) Bereiche kollisionsfrei fahrbarer Fahrzeugtrajektorien ausgehend von einer momentanen Fahrzeugposition umfasst und wobei die Komponente zum Berechnen eingerichtet ist, die Berechnung basierend auf einer momentanen Umfeldsituation sowie mindestens einer früheren Umfeldsituation durchzuführen; und
- eine Komponente zum Bereitstellen eines Ausgabesignals (80) zur Ausgabe des berechneten Fahrbereichs auf eine Mensch-Maschine-Schnittstelle des Fahrzeugs (30).

## Claims

1. Method in a driver assistance system (32) of a vehicle (30), having the following steps of:
- acquiring environment data (100), which represent an environment of the vehicle (30), by means of environment sensors (34, 36); calculating (102), on the basis of the environment data, a driving range (48) which can be driven without a collision and comprises regions of vehicle trajectories which can be driven without a collision starting from a current vehicle position;
- providing an output signal (104) for outputting the calculated driving range (48) to a man-machine interface of the vehicle (30), and
- output on a display of a man-machine interface of the vehicle (30),
- the calculation being carried out on the basis of a current environment situation and at least one earlier environment situation.

2. Method according to Claim 1, the collision-free driving range comprising at least one region in front of and/or behind the vehicle.

3. Method according to one of the preceding claims, the driving range comprising precisely one areal contiguous region in front of and/or behind the vehicle.

4. Method according to one of the preceding claims, a resulting vehicle trajectory (50, 51, 52) being calculated on the basis of a current steering state of the vehicle (30) and being output.

5. Method according to one of the preceding claims, the steering wheel angle being determined for a vehicle trajectory which is optimum according to predefined criteria, and the resulting vehicle trajectory being output.

6. Method according to one of the preceding claims, the collision-free driving range being displayed in a manner superimposed on a representation of the vehicle environment.

7. Computer program for carrying out the method according to one of the preceding claims when the computer program is executed on a programmable computer device.

8. Driver assistance system (32) having the following components:
- environment sensors (34, 36) for acquiring environment data which represent an environment of the vehicle (30),
- a component for calculating a driving range (48) which can be driven without, a collision on the basis of the environment data, the driving range (48) comprising regions of vehicle trajectories which can be driven without a collision starting from a current vehicle position, and the calculating component being set up to carry out the calculation on the basis of a current environment situation and at least one earlier environment situation; and
- a component for providing an output signal (80) for outputting the calculated driving range to a man-machine interface of the vehicle (30).

## Revendications

1. Procédé dans un système d'assistance au conducteur (32) d'un véhicule (30), comprenant les étapes suivantes :
- acquisition, par un système de détection d'environnement (34, 36), de données d'environnement (100) qui représentent l'environnement du véhicule (30) ; calcul (102), en se basant sur les données d'environnement, d'une zone de circulation (48) circulable sans collision, la zone comprenant des trajectoires de véhicule circulables sans collision à partir d'une position momentanée du véhicule ;
- fourniture d'un signal de sortie (104) servant à délivrer en sortie la zone de circulation (48) calculée sur une interface homme-machine du véhicule (30), et
- délivrance en sortie sur un écran d'une interface homme-machine du véhicule (30),
- le calcul étant effectué en se basant sur une situation environnementale momentanée ainsi qu'au moins une situation environnementale antérieure.

2. Procédé selon la revendication 1, selon lequel la zone de circulation sans collision comprend au moins une zone devant et/ou derrière le véhicule.

3. Procédé selon l'une des revendications précédentes, selon lequel la zone de circulation comprend au moins une zone contiguë en surface devant et/ou derrière le véhicule.

4. Procédé selon l'une des revendications précédentes, selon lequel une trajectoire de véhicule (50, 51, 52) résultante est calculée et délivrée en sortie en se basant sur un état de direction momentané du véhicule (30).

5. Procédé selon l'une des revendications précédentes, selon lequel l'angle de braquage est déterminé pour une trajectoire de véhicule optimale selon des critères prédéfinis et la trajectoire de véhicule résultante est délivrée en sortie.

6. Procédé selon l'une des revendications précédentes, selon lequel la zone de circulation sans collision est affichée superposée à une représentation de l'environnement du véhicule.

7. Programme informatique destiné à mettre en oeuvre le procédé selon l'une des revendications précédentes lorsque le programme informatique est exécuté sur un dispositif informatique programmable.

8. Système d'assistance au conducteur (32), comprenant les composants suivants :
- système de détection d'environnement (34, 36) destiné à acquérir des données d'environnement qui représentent un environnement du véhicule (30) ;
- un composant destiné à calculer une zone de circulation (48) circulable sans collision en se basant sur les données d'environnement, la zone de circulation (48) comprenant des trajectoires de véhicule circulables à partir d'une position momentanée du véhicule et le composant étant conçu pour calculer, pour effectuer le calcul en se basant sur une situation environnementale momentanée ainsi qu'au moins une situation environnementale antérieure ; et
- un composant destiné à fournir un signal de sortie (80) servant à délivrer en sortie la zone de circulation calculée sur une interface homme-machine du véhicule (30).
